# EUROPÄISCHE PATENTSCHRIFT

(11) **EP 0 748 721 B1**
(45) Veröffentlichungstag und Bekanntmachung des Hinweises auf die Patenterteilung: **19.09.2001**
(21) Anmeldenummer: 96106871.5
(22) Anmeldetag: 02.05.1996
(51) Int. Cl.: B60R 7/00

(54) **Aufnahmevorrichtung für Geräte und/oder Gegenstände im Fahrgastraum eines Kraftfahrzeuges**
Holder for devices or articles in a passenger compartment of a motor vehicle
Dispositif de logement pour appareils ou objects dans le compartiment passager d'un véhicule

(30) Priorität: 14.06.1995 DE 19521592
(43) Veröffentlichungstag der Anmeldung: 18.12.1996
(73) Patentinhaber: DaimlerChrysler AG, 70567 Stuttgart (DE)
(72) Erfinder: Zipperle, Ralf, 75382 Ottenbronn (DE); Körber, Jürgen, 71065 Sindelfingen (DE)

(56) Entgegenhaltungen:
- DE-A- 2 833 823
- DE-C- 4 307 088
- DE-U- 1 969 487
- DE-U- 9 001 579
- US-A- 5 366 186

## Beschreibung

Die Erfindung betrifft eine Aufnahmevorrichtung für Geräte und/oder Gegenstände im Fahrgastraum eines Kraftfahrzeugs gemäß dem Oberbegriff des Patentanspruchs 1.

Bei einer bekannten Aufnahmevorrichtung dieser Art (DE 43 07 088 C1) sind die einzelnen Einsätze durch Steckverbindungen aneinander austauschbar befestigt. Die aus den zusammengesetzten Einsätzen gebildete Baueinheit wird durch die Schachtöffnung hindurch in den Schacht eingesetzt und mit einer am obersten Einsatz ausgebildeten Aufsteckrippe auf einen im Schacht ausgebildeten Quersteg aufgeschoben. Eine an der Aufsteckrippe filmscharnierartig ausgebildete Abdeckblende, die an dem unmittelbar oberhalb der Aufnahmevorrichtung angeordneten Halter für das Autoradio verschraubt wird, legt die Baueinheit gegen unbeabsichtigtes Herausziehen aus dem Schacht fest. Eine solche Aufnahmevorrichtung ist leicht und schnell und ohne Werkzeug zu montieren und demontieren, was sich günstig auf die Fertigungs- und die Werkstattkosten auswirkt. Die Praxis hat jedoch gezeigt, daß diese Art Festlegung der Einsätze im Schacht nicht ausreicht, um bei Heckcrash, also beim Aufprall des Fahrzeugs auf ein Hindernis mit dem Heck voran oder beim Auffahren eines Zweitfahrzeuges auf das Heck des Fahrzeugs, ein Herausschleudern der Einsätze aus dem Schacht zuverlässig zu vermeiden.

Der Erfindung liegt die Aufgabe zugrunde, eine Aufnahmevorrichtung für Geräte und/oder Gegenstände im Fahrgastraum eines Kraftfahrzeugs der eingangs genannten Art so zu verbessern, daß sie einerseits schnell und einfach zu montieren und zu demontieren bleibt und andererseits den Sicherheitsanforderungen bei Heckaufprall genügt.

Die Aufgabe ist bei einer Aufnahmevorrichtung der im Oberbegriff des Patentanspruchs 1 definierten Gattung erfindungsgemäß durch die Merkmale im Kennzeichenteil des Patentanspruchs 1 gelöst.

Die erfindungsgemäße Aufnahmevorrichtung hat den Vorteil, daß die bei der Montage selbsttätig verrastende Verriegelung zwischen jedem Einsatz und dem Schacht nur manuell wieder lösbar ist und damit hohe Zugkräfte, wie sie bei Heckaufprall auftreten, problemlos aufzunehmen vermag. Die besonders einfache Demontage wird nach Ausbau des darüberliegenden Einsatzes gewährleistet, in dem mittels Zeigefinger die kraft- und formschlüssige Verriegelung gelöst und danach der Einsatz herausgezogen werden kann. Jeder Einsatz kann also nach Entfernen des darüberliegenden Einsatzes seinerseits schnell und werkzeuglos aus dem Schacht ausgebaut werden. Die Verriegelung des im Schacht obersten Einsatzes ist über den darüber angeordneten Zugangsraum zugänglich.

Vorteilhafte Ausführungsformen der erfindungsgemäßen Aufnahmevorrichtung mit zweckmäßigen Weiterbildungen und Ausgestaltungen der Erfindung sind in den weiteren Patentansprüchen angegeben.

Gemäß einer vorteilhaften Ausführungsform der Erfindung wird der Zugangsraum zum obersten Einsatz zur Unterbringung des Autoradios oder eines anderen fest montierten Aggregats genutzt. Damit entsteht kein Leerraum, und die Einsätze können nach Ausbau des Autoradios in der vorstehend beschriebenen Weise demontiert werden. Zum Radioausbau ist zwar Werkzeug erforderlich, doch ist heute üblicherweise der Ausbau alldemein servicefreundlich gestaltet und in Sekundenschnelle zu bewerkstelligen. Elektrische Anschlüsse am Autoradio müssen für den Zugang zur Verriegelung des obersten Einsatzes der Aufnahmevorrichtung nicht gelöst werden.

Die erfindungsgemäße hochfeste Verriegelung zwischen jedem Einsatz und dem Schacht läßt sich in konstruktiv einfacher Weise realisieren, wenn gemäß einer bevorzugten Ausführungsform der Erfindung jede Einsatz-Verriegelung eine auf der Oberseite des Einsatzes sich im Parallelabstand dazu erstreckende Federzunge mit davon rechtwinklig abstehendem Raststeg und eine im Schacht quer zur Schachttiefe ausgerichtete Rastplatte aufweist, die von dem Raststeg mit Erreichen der Einschubendstellung des Einsatzes im Schacht hintergriffen wird. Zum Lösen der Verriegelung wird die Federzunge an ihrem freien Ende nach unten, hin zur Oberfläche des Einsatzes bewegt, wodurch der Raststeg von der Rastplatte abhebt und durch Ziehen am Einsatz unter der Rastplatte vorbeibewegt werden kann. Danach kann die Federzunge wieder freigegeben und der Einsatz vollständig aus dem Schacht herausgezogen werden. Zum selbsttätigen Einrasten von Raststeg und Rastplatte am Ende des Einschubweges sind an beiden Anhebeschrägen so ausgebildet, daß die Federzunge beim Einschieben automatisch nach unten bewegt wird und der Raststeg unter der Rastplatte vorbeigeführt wird.

Die Erfindung ist anhand eines in der Zeichnung dargestellten Ausführungsbeispiels im folgenden näher beschrieben. Es zeigen:
- Fig. 1: einen Längsschnitt einer Aufnahmevorrichtung für Geräte und/oder Gegenstände im Fahrgastraum eines Kraftfahrzeugs, ausschnittweise dargestellt,
- Fig. 2: einen Schnitt längs der Linie II-II in Fig. 1,
- Fig. 3: eine vergrößerte Darstellung des Ausschnitts III in Fig. 1.

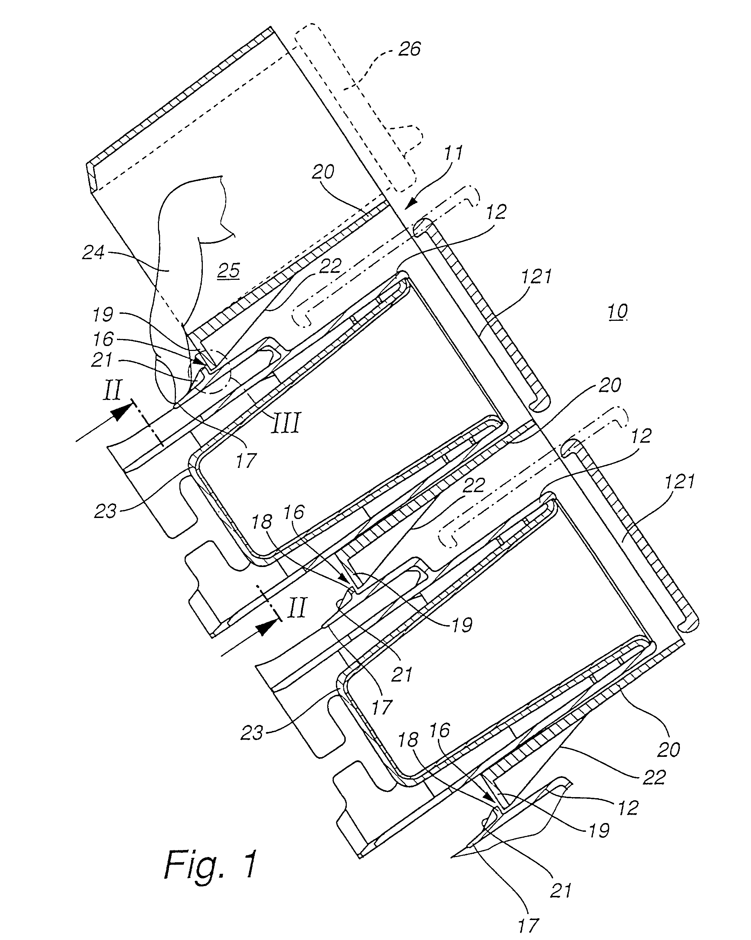

Die in Fig. 1 im Längsschnitt ausschnittweise dargestellte Aufnahmevorrichtung für Geräte und/oder Gegenstände im Fahrgastraum eines Kraftfahrzeugs weist einen mit 11 angedeuteten fahrzeugfesten Schacht mit zum Fahrgastraum 10 weisender Schachtöffnung auf, der im Fahrzeug beispielsweise von der sog. Mittelkonsole gebildet wird, die sich mittig an der Innenraumfront vom Armaturenbrett bis hin zum Boden erstreckt und dort - wenn vorhanden - auf dem Kardantunnel aufsitzt. In diesem Schacht 11, von dem in Fig. 1 nur die eine Seitenwand dargestellt ist, sind Einsätze 12 übereinander angeordnet, wobei ihre Beschickungsöffnungen 121 zum Fahrgastraum 10, also zu den Sitzen, weisen und für die Fahrzeuginsassen, d.h. Fahrer und Beifahrer, zugänglich sind. Diese Einsätze 12 können unterschiedliche Funktionen erfüllen, beispielsweise als Brillenfach oder Kartenablagefach dienen oder als Kassettenbox oder Ascher ausgebildet sein. In Fig. 1 sind zwei Einsätze 12 dargestellt, jedoch kann die Zahl der Einsätze 12 je nach Höhe des Schachtes 11 größer sein.

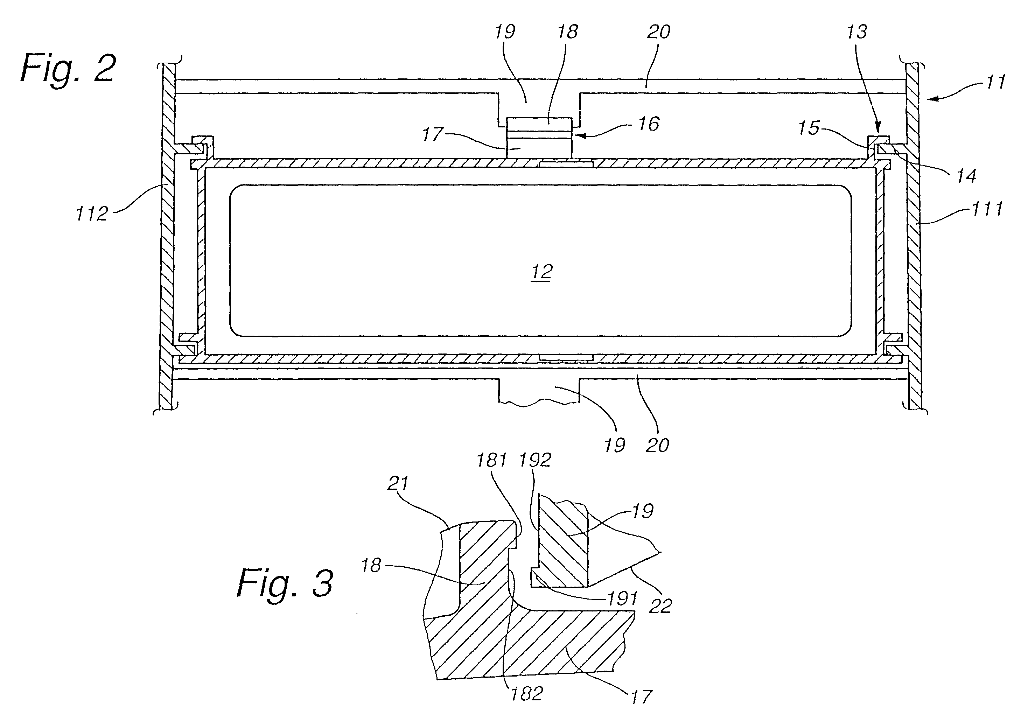

Zwischen den beiden einander gegenüberliegenden Schacht-Seitenwänden 111,112 (Fig. 2) und jedem Einsatz 12 sind Längsführungen 13 zum schubladenartigen Einschieben der Einsätze 12 in den Schacht 11 bzw. Herausziehen der Einsätze 12 aus dem Schacht 11, jeweils durch die Schachtöffnung hindurch, vorgesehen. Wie aus Fig. 2 ersichtlich ist, wird jede Längsführung 13 von einer an der Schachtseitenwand 111 bzw. 112 innen rechtwinklig abstehenden Rippe 14, die sich in Schachttiefe erstreckt und einer an dem Einsatz 12 ausgebildeten schienenartige Ausnehmung 15 mit U-Profil gebildet, in die die Rippe 14 mit Spiel eingreift. Insgesamt sind vier Längsführungen 13 zwischen jedem Einsatz 12 und dem Schacht 11 vorgesehen, so daß der Einsatz 12 an seinen Eckkanten insgesamt vier einstückig angeformte Ausnehmungen 15 aufweist, die sich in Längsrichtung des Einsatzes 12 erstrecken und jede Seitenwand 11 bzw. 112 zwei Rippen 14 trägt.

Zwischen jedem Einsatz 12 und dem Schacht 11 ist eine Verriegelung 16 vorgesehen, die beim Einschub des Einsatzes 12 mit Erreichen der Einschubendstellung des Einsatzes 12 selbsttätig einrastet. Die Verriegelung 16 ist so konstruiert, daß sie nur manuell lösbar ist. Im einzelnen weist hierzu die Verriegelung 16 eine auf der Oberseite des Einsatzes 12 sich im Parallelabstand dazu erstreckende Federzunge 17 mit einem davon rechtwinklig abstehenden Raststeg 18 und eine Rastplatte 19 auf, die im Schacht 11 festgelegt und quer zur Schachttiefe ausgerichtet ist. Wie aus Fig. 1 und 2 ersichtlich ist, ist die Rastplatte 19 einstückig an einer Schacht-Zwischenwand 20 ausgebildet, die zwischen den beiden Schachtwänden 111 und 112 gehalten ist (Fig. 2) und sich über nur einen Teil der Schachttiefe erstreckt (Fig. 1). Die Rastplatte 12 ist mittig an der Zwischenwand 20 einstückig ausgebildet und strebt von dieser rechtwinklig nach unten ab. Wie aus der vergrößerten Darstellung des Ausschnitts III in Fig. 3 hervorgeht, ist am Raststeg 18 eine Rastnase 181 und an der Rastplatte 19 eine Rastnase 191 ausgebildet. Die Rastnasen 181,191 stehen dabei von den einander zugekehrten Flächen 182 und 192 von Raststeg 18 und Rastplatte 19 ab und sind in Vertikalrichtung zueinander versetzt. Zwischen dem Ende der Federzunge 17 und dem Raststeg 18 verläuft auf der Oberseite der Federzunge 17 eine Anhebeschräge 21, die von dem Federzungenende bis zum freien Ende des Raststegs 18 hin ansteigt. Eine weitere Anhebeschräge 22 erstreckt sich auf der Zwischenwand 20 bis hin zum freien Ende der Rastplatte 19 ansteigend.

Zur Montage der Aufnahmevorrichtung wird jeder Einsatz 12 in den Längsführungen 13 in den Schacht 11 eingeschoben. Dabei gleitet die an der Federzunge 17 ausgebildete Anhebeschräge 21 an der an der Schacht-Zwischenwand 20 ausgebildeten Anhebeschräge 22 entlang, wodurch die Federzunge 17 mit ihrem freien Ende nach unten gedrückt wird, so daß der Raststeg 18 unter der Rastplatte 19 hindurchfahren kann. In der Einschubendstellung schlägt der Einsatz 12 an einem Anschlag 23 (Fig. 1) im Schacht 11 an. In dieser Einschubendstellung hat der Raststeg 18 die Rastplatte 19 passiert, und unter der Federwirkung der Federzunge 17 schnappt der Raststeg 18 hinter die Rastplatte 19. Ein Herausziehen des Einsatzes 12 ist nunmehr nicht mehr möglich. Selbst bei Heckaufprall reichen die am Einsatz 12 angreifenden Kräfte nicht aus, die Verriegelung 16 zu lösen. Bei extremen Zugkräften am Einsatz 12 verhaken sich die Rastnasen 181 und 191 an Raststeg 18 und Rastplatte 19 und verhindern ein Abgleiten des Raststeges 18 von der Rastplatte 19.

Wie in Fig. 1 dargestellt ist, muß zur Demontage eines Einsatzes 12 die Schacht-Zwischenwand 20 übergriffen und die hinter dem Ende der Zwischenwand 20 liegende Federzunge 17 mit dem Zeigefinger 24 soweit nach unten, d.h. in Richtung zum Einsatz 12 hin, gedrückt werden, bis der Raststeg 18 von der Rastplatte 19 abhebt. Durch leichtes Ziehen am Einsatz 12 kann der Raststeg 18 unter der Rastplatte 19 vorbeibewegt werden. Danach liegen die Anhebeschrägen 21,22 wieder aufeinander, die Federzunge 17 kann losgelassen werden, und der Einsatz 12 kann vollständig aus dem Schacht 11 herausgezogen werden. Ist der Einsatz 12 aus dem Schacht 11 herausgezogen, so wird nunmehr die Verriegelung 16 des darunterliegenden Einsatzes 12 durch den vom entfernten Einsatz 12 im Schacht 11 freigemachten Freiraum hindurch zugänglich und auch der darunterliegende Einsatz 12 kann in gleicher Weise demontiert werden. Die Einsätze 12 können also in der Reihenfolge vom obersten bis zum untersten Einsatz 12 im Schacht 11 nach Lösen der jeweiligen Verriegelung 16 entfernt werden.

Damit auch der oberste Einsatz im Schacht 11 demontiert werden kann, ist oberhalb des obersten Einsatzes 12 ein Zugangsraum 25 vorgesehen, durch den hindurch die Verriegelung 16 des im Schacht 11 obersten Einsatzes 12 mit dem Zeigefinger 24 gegriffen werden kann. Wie in Fig. 1 dargestellt ist, wird dieser Zugangsraum 25 zur Aufnahme eines Autoradios 26 genutzt, das in Fig. 1 strichliniert angedeutet ist. Dieses Autoradio 26 ist in herkömmlicher Weise fest in dem Zugangsraum 25 montiert, so daß das Demontieren der Aufnahmevorrichtung die vorherige Demontage des Autoradios 26 und die Freilegung des Zugangsraums 25 erfordert. Die Demontage des Autoradios 26 ist bei den heutigen Halterkonstruktionen für Autoradios 26 in Sekundenschnelle möglich, so daß der notwendige Ausbau des Autoradios 26 die Demontage der Vorrichtung nicht unangemessen beeinträchtigt. Das Lösen der elektrischen Anschlüsse am Autoradio 26 ist für den Zugang zur Verriegelung 16 am obersten Einsatz 12 durch den Zugangsraum 25 hindurch nicht erforderlich.

## Patentansprüche

1. Aufnahmevorrichtung für Geräte und/oder Gegenstände im Fahrgastraum eines Kraftfahrzeugs mit einem fahrzeugfesten Schacht, der eine zum Fahrgastraum weisende Schachtöffnung aufweist, insbesondere Mittelkonsole, und mit im Schacht übereinander angeordneten Einsätzen mit zum Fahrgastraum weisender Beschickungsöffnung, wie Ablagefach, Kassettenbox, Ascher u.dgl.,
**dadurch gekennzeichnet,**
**daß** zwischen den Schacht-Seitenwänden (111,112) und jedem Einsatz (12) Längsführungen (13) zum schubladenartigen Einschieben der Einsätze (12) in den Schacht (11) bzw. Herausziehen der Einsätze 12 aus dem Schacht (11), jeweils durch die Schachtöffnung hindurch, vorgesehen sind, daß zwischen jedem Einsatz (12) und dem Schacht (11) eine beim Einschub des Einsatzes (12) selbsttätig einrastende, manuell lösbare Verriegelung (16) derart angeordnet ist, daß sie nach Entfernen des darüberliegenden Einsatzes (12) aus dem Schacht (11) zur manuellen Betätigung zugänglich ist, und daß unmittelbar oberhalb des im Schacht (11) obersten Einsatzes (12) ein über die Einsatztiefe hinwegreichender Zugangsraum (25) angeordnet ist.

2. Vorrichtung nach Anspruch 1,
**dadurch gekennzeichnet,**
**daß** der Zugangsraum (25) mit einem Autoradio (26) oder einem anderen fest montierten Aggregat belegt ist.

3. Vorrichtung nach Anspruch 1 oder 2,
**dadurch gekennzeichnet,**
**daß** jede Einsatz-Verriegelung (16) eine auf der Oberseite des Einsatzes (12) sich im Parallelabstand dazu erstreckende Federzunge (17) mit davon rechtwinklig abstehendem Raststeg (18) und eine im Schacht (11) quer zur Schachttiefe ausgerichtete Rastplatte (19) aufweist, die von dem Raststeg (18) mit Erreichen der Einschubendstellung des Einsatzes (12) im Schacht (11) hintergriffen wird.

4. Vorrichtung nach Anspruch 3,
**dadurch gekennzeichnet,**
**daß** jede Rastplatte (19 an einer zwischen den Schacht-Seitenwänden (111,112) gehaltenen, sich parallel zu dem Einsatz (12) über einen Teil der Schachttiefe erstreckenden Zwischenwand (20), vorzugsweise einstückig, ausgebildet ist.

5. Vorrichtung nach Anspruch 3 oder 4,
**dadurch gekennzeichnet,**
**daß** am Raststeg (18) und an der Rastplatte (19) Anhebeschrägen (21,22) ausgebildet sind, die bei Einschub des Einsatzes (12) aneinander entlanggleiten.

6. Vorrichtung nach einem der Ansprüche 3 - 5,
**dadurch gekennzeichnet,**
**daß** auf den einander zugekehrten Flächen (181,191) von Raststeg (18) und Rastplatte (19) davon abstehende Rastnasen (181,191) ausgeformt sind, die in Vertikalrichtung zueinander versetzt sind.

7. Vorrichtung nach einem der Ansprüche 1 - 6,
**dadurch gekennzeichnet,**
**daß** die Längsführungen (13) von an den Schacht-Seitenwänden (111,112) abstehenden, in Schachttiefe sich erstreckenden Rippen (14) und von an den Einsätzen (11) ausgebildeten schienenartigen Ausnehmungen (15) gebildet sind, in die die Rippen (14) mit Spiel eingreifen.

## Claims

1. A receiving device for equipment and/or objects in the passenger compartment of a motor vehicle with a shaft fixed to the vehicle which has a shaft opening facing the passenger compartment, in particular the centre console, and with inserts positioned one above the other in the shaft with filling openings facing the passenger compartment, such as a storage compartment, a cassette box, an ashtray, etc.,
**characterised in that**
longitudinal guides (13) are provided between the shaft side walls (111, 112) and each insert (12) for pushing the inserts (12) into the shaft (11) and pulling the inserts (12) out of the shaft (11), in each case through the shaft opening, in the manner of a drawer, that a manual release locking device (16) which engages automatically when the insert (12) is pushed in is positioned between each insert (12) and the shaft (11) in such a manner that once the insert (12) above it has been removed from the shaft (11) it is accessible for manual operation, and that an access space (25) reaching beyond the depth of the inserts (12) is positioned immediately above the uppermost insert (12) in the shaft (11).

2. A device in accordance with Claim 1,
**characterised in that**
the access space (25) is occupied by a car radio (26) or another fixed mounted unit.

3. A device in accordance with Claim 1 or 2,
**characterised in that**
each insert locking device (16) has a spring tongue (17) which extends along the top of the insert (12) parallel at a distance thereto with a snap-in pin (18) which protrudes from it at right angles and a snap-in plate (19) positioned in the shaft at right angles to the depth of the shaft behind which the snap-in pin (18) engages when the insert (12) reaches the fully closed position in the shaft (11).

4. A device in accordance with Claim 3,
**characterised in that**
each snap-in plate (19) is formed on an intermediate wall (20) held between the shaft side walls (111, 112) extending parallel to the insert (12) over part of the depth of the shaft, preferably in one piece.

5. A device in accordance with Claim 3 or 4,
**characterised in that**
lifting bevels (21, 22) are formed on the snap-in pin (18) and the snap-in plate (19) which slide along each other when the insert (12) is pushed in.

6. A device in accordance with one of Claims 3 to 5,
**characterised in that**
protruding snap-in lugs (181, 191) are formed on the faces (181, 191) of the snap-in pin (18) and the snap-in plate (19) facing each other which are vertically offset in relation to each other.

7. A device in accordance with one of Claims 1 to 6,
**characterised in that**
the longitudinal guides (13) are formed by ribs (14) which stand away from the shaft side walls (111, 112) and extend the depth of the shaft and by rail-like recesses (15) formed on the inserts (11) in which the ribs (14) engage with play.

## Revendications

1. Dispositif de logement pour des appareils et/ou des objets dans l'habitacle d'un véhicule automobile, avec un puits fixé à demeure au véhicule, présentant une ouverture de puits tournée vers l'habitacle, en particulier une console centrale, et avec des inserts disposés les uns au-dessus des autres dans le puits, ayant une ouverture de garnissage tournée vers l'habitacle, tel qu'un compartiment de dépose, une boîte pour cassettes, un cendrier et analogues,
**caractérisé en ce que**
entre les parois latérales de puits (111, 112) et chaque insert (12) sont prévus des guidages longitudinaux (13) pour insérer, à la façon d'un tiroir, les inserts (12) dans le puits (11) ou extraire les inserts (12) hors du puits (11), chaque fois en passant par l'ouverture de puits, en ce qu'entre chaque insert (12) et le puits (11) est disposé un verrouillage (16) désolidarisable manuellement, s'encliquetant automatiquement lorsque l'insert (12) est inséré, de manière que, après enlèvement hors du puits (11) de l'insert (12) placé au-dessus, le verrouillage soit accessible pour effectuer un actionnement manuel, et en ce que, directement au-dessus de l'insert (12) le plus haut dans le puits (11), est disposé un espace d'accès (25) faisant la profondeur de l'insert.

2. Dispositif selon la revendication 1, **caractérisé en ce que** l'espace d'accès (25) est garni d'un autoradio (26) ou d'un autre groupe, monté à demeure.

3. Dispositif selon la revendication 1 ou 2, **caractérisé en ce que** chaque verrouillage d'insert (16) présente une languette élastique (17), s'étendant sur la face supérieure de l'insert (12), à distance et parallèlement à celle-ci, avec une nervure d'encliquetage (18) en faisant saillie à angle droit, et présente une plaque d'encliquetage (19) orientée dans le puits (11), transversalement par rapport à la profondeur du puits, plaque saisie par l'arrière par la nervure d'encliquetage (18) à l'atteinte d'une position finale d'insertion de l'insert (12) dans le puits (11).

4. Dispositif selon la revendication 3, **caractérisé en ce que** chaque plaque d'encliquetage (19) est réalisée, de préférence d'une seule pièce, sur une paroi intermédiaire (20), fixée entre les parois latérales de puits (111, 112), en s'étendant parallèlement à l'insert (12), sur une partie de la profondeur du puits.

5. Dispositif selon la revendication 3 ou 4, **caractérisé en ce que** sur la nervure d'encliquetage (18) et sur la plaque d'encliquetage (19) sont réalisés des chanfreins de soulèvement (21, 22), qui glissent les uns sur les autres lors de l'insertion de l'insert (12).

6. Dispositif selon l'une des revendications 3 à 5, **caractérisé en ce que** sur les surfaces (181, 191), tournées les unes sur les autres, de la nervure d'encliquetage (18) et de la plaque d'encliquetage (19) sont formés des ergots d'encliquetage (181, 191) en saillie, qui sont décalés les uns par rapport aux autres en direction verticale.

7. Dispositif selon l'une des revendications 1 à 6, **caractérisé en ce que** les guidages longitudinaux (13) sont formés par des nervures (14), s'étendant dans la profondeur du puits, faisant saillie sur les parois latérales de puits (111, 112), et par des évidements (15) du genre de rails, réalisés sur les inserts (11), évidements dans lesquels les nervures (14) s'engagent avec du jeu.
